# EUROPÄISCHE PATENTSCHRIFT

(11) **EP 3 078 924 B1**
(45) Veröffentlichungstag und Bekanntmachung des Hinweises auf die Patenterteilung: **06.03.2019**
(21) Anmeldenummer: 16164098.2
(22) Anmeldetag: 06.04.2016
(51) Int. Cl.: B65D 21/02, B65D 67/02, B65D 85/48, B65D 81/05

(54) **HALTERUNG UND MODULARES STAPELSYSTEM ZUM SICHEREN HALTERN, LAGERN UND/ODER TRANSPORTIEREN VON PHOTOVOLTAIKMODULEN, THERMISCHEN KOLLEKTORMODULEN ODER ANDEREN FLACHEN, QUADERFÖRMIGEN KÖRPERN**
HOLDER AND MODULAR STACKING SYSTEM FOR SECURE HOLDING, STORAGE AND/OR THE TRANSPORT OF PHOTOVOLTAIC MODULES, THERMAL COLLECTOR MODULES OR OTHER FLAT, CUBOID BODIES
FIXATION ET SYSTÈME D'EMPILEMENT MODULAIRE POUR LA FIXATION ET/OU LE TRANSPORT ET/OU LE STOCKAGE SECURISÉS DE PANNEAUX PHOTOVOLTAÏQUES, DE PANNEAUX COLLECTEURS THERMIQUES OU D'AUTRES CORPS PLATS ET CARRÉS

(30) Priorität: 07.04.2015 DE 202015101703 U
(43) Veröffentlichungstag der Anmeldung: 12.10.2016
(73) Patentinhaber: Häberlein-Lehr, Ulla, 64319 Pfungstadt (DE)
(72) Erfinder: Häberlein, Joachim, D-64319 Pfungstadt (DE)
(74) Vertreter: Blumbach · Zinngrebe Patent- und Rechtsanwälte

(56) Entgegenhaltungen:
- EP-A2- 2 320 157
- EP-A2- 2 439 770
- CN-A- 102 351 071
- DE-A1- 3 701 293
- DE-A1-102008 012 774
- US-A- 2 226 601

## Beschreibung

Die vorliegende Erfindung betrifft eine Halterung zum sicheren Haltern, Lagern und/oder zum sicheren Transportieren von photovoltaischen Modulen, das heißt Photovoltaik-Modulen (PV-Modulen), thermischen Kollektormodulen, nachfolgend allgemein als Module bezeichnet, oder anderen flachen, quaderförmigen Körpern sowie ein modulares Stapelsystem umfassend mehrere derartige Halterungen, wobei das modulare Stapelsystem insbesondere zum Nebeneinanderstapeln vertikal ausgerichteter Module oder zum Aufeinanderstapeln horizontal ausgerichteter Module oder anderer flacher, quaderförmiger Körper geeignet ist. Bei den anderen flachen, quaderförmigen Körpern kann es sich beispielsweise um Glasscheiben, Türblätter, Tischplatten, Steinplatten und Ähnliches handeln, für deren sicheres Lagern und Transportieren die erfindungsgemäße Halterung und das erfindungsgemäße modulare Stapelsystem ebenfalls einsetzbar ist.

Dank eines gewandelten Energiebewusstseins der Bevölkerung und unterstützt durch staatliche Förderinitiativen hat die Nutzung erneuerbarer Energiequellen immer mehr wirtschaftliche Bedeutung gewonnen - dies gilt vor allem auch für die Bereiche der Photovoltaik, der Umwandlung von Sonnenlicht in elektrischen Strom, und der Solarthermie, der Wärmegewinnung aus Sonnenenergie mit Hilfe thermischer Solaranlagen und insbesondere thermischer (Solar-) Kollektoren. Vielerorts - nicht nur in Deutschland - sind leistungsfähige, hochmodern ausgestatte Fabriken entstanden, in denen heute Photovoltaik-Module (PV-Module) und thermische (Solar-)Kollektormodule nach rationellsten Verfahren als Massenartikel hergestellt werden, um in alle Teile Europas und der Welt versandt zu werden.

PV-Module bestehen in der Standard-Ausführung aus einer vorderseitigen Einscheiben-Sicherheitsglasscheibe, zwei verschmolzenen Lagen transparenter Laminierfolie, zwischen denen die Photovoltaik-Zellen, meist aus Silicium, und ein elektrisches Leitersystem eingebettet sind, sowie einer die Rückseite dampfdiffusionsdicht verschließenden speziellen Kunststoff-Folie. Man spricht in diesem Fall von Glas/Kunststoff-Modulen. Bei den sogenannten Glas/Glas-Modulen ist die Rückseite stattdessen mit einer Glasscheibe versehen.

PV-Module können einerseits mit einem Rahmen aus Metallprofil, beispielsweise gezogenem Aluminiumprofil, ausgestattet sein, der zum Beispiel eine Rahmentiefe von 42 mm hat. Andererseits werden aber auch rahmenlose PV-Module - sowohl in der Ausführung als Glas/Kunststoff-Module wie auch als Glas/Glas-Module - hergestellt und versandt.

Die Größe von PV-Standardmodulen liegt meist im Bereich zwischen 0,8 m² und 1,6 m². Das Gewicht liegt bei gerahmten Modulen meist im Bereich zwischen 14 und 28 kg und bei ungerahmten Modulen je nach Größe zwischen 5 und 20 kg, wobei Glas/Glas-Module um etwa 60 % schwerer sein können als Glas/Kunststoff-Module.

Thermische (Solar-)Kollektormodule können im Wesentlichen in zwei Typen, nämlich Flachkollektoren und Vakuumröhrenkollektoren, unterschieden werden.

Flachkollektoren bestehen allgemein aus:
- einer vorderseitigen Glasscheibe,
- einer hinter der Glasabdeckung angeordneten Absorberfläche, beispielweise aus beschichtetem Kupfer,
- einer hinter dem Absorber angeordneten Verrohrung üblicherweise aus Kupfer, durch die eine zu erwärmende sogenannte Solarflüssigkeit (Wärmeträger) geleitet wird, welche in der Regel aus einem Wasser-Propylenglykol-Flüssigkeitsgemisch besteht, sowie
- einer den Kollektor an allen Seiten, außer der Vorderseite, umgebenden Isolation aus wärmedämmendem Material.

Vakuumröhrenkollektoren bestehen demgegenüber allgemein aus:
- einer äußeren Glasröhre, und
- einer im inneren der Glasröhre angeordneten Verrohrung, beispielsweise aus Kupfer oder einer Kupferlegierung, durch die eine zu erwärmende Solarflüssigkeit (Wärmeträger) geleitet wird, wobei die Außenseite der Verrohrung als Absorberfläche dient und hierfür speziell beschichtet ist und wobei zur Wärmedämmung zwischen der äußeren Glasröhre und der innen liegenden Verrohrung ein Vakuum als Isolator besteht.

In den meisten Fällen sind thermische Kollektormodule mit einem Rahmen aus Metallprofil, etwa Aluminium oder Edelstahl, ausgestattet. Insbesondere Flächenkollektoren können ergänzend oder alternativ an allen Seiten, außer der Vorderseite, mit einer geschlossenen Wanne beispielsweise aus Aluminium umgeben sein.

Die Größe von üblichen thermischen (Solar-)Kollektormodulen liegt meist im Bereich zwischen 0,8 und 2,5 qm. Das Gewicht liegt bei gerahmten Kollektormodulen meist im Bereich zwischen 40 und 80 kg.

In der Vergangenheit wurde bereits erkannt, dass sich die Überlegungen zur innovativen Rationalisierung nicht nur auf fertigungstechnische Kriterien beschränken dürfen, sondern auch den Bereich Haltern, Lagerung, Verpackung, Versand und Transportsicherung einbeziehen müssen.

Für den Transport zum Kunden wurden die Module üblicherweise einzeln in Kartonage verpackt und auf Holzpaletten horizontal übereinander gestapelt. Um einen Stapel aus Einzelpackungen gegen ein Verrutschen zu sichern, wurde dieser durch Spannbänder mit der Palette verbunden.

Diese allgemein übliche Methode der Transportverpackung von Modulen war jedoch mit gravierenden Nachteilen verbunden. Hierzu zählten ein enormer Bedarf an erforderlichem Verpackungsmaterial, insbesondere Kartonage, sowie ein nicht unerheblicher Arbeitsaufwand sowohl für das Einpacken als auch für das Auspacken der einzeln kartonierten Module beim Endabnehmer. Hinzu kam die undankbare Aufgabe, beträchtliche Mengen Kartonage am Montageort zu sammeln, erforderlichenfalls zu zerkleinern und dem Papierrecycling zuzuführen. Darüber hinaus konnten mit dieser Methode die Module nur bis zu einer begrenzten Stapelhöhe gestapelt werden, da sich die addierende Gewichtslast der gestapelten Module auf die zuunterst liegenden Module überträgt. Zu dieser statischen Belastung kommt noch die dynamische Belastung beim Transport hinzu, zum Beispiel durch hartes Absetzen mit dem Gabelstapler, Beschleunigungs-, Verzögerungs- und Zentrifugalkräfte beim LKW-Transport und vor allem Erschütterungen beim Fahren über Schwellen und Schlaglöcher. All dies kann bei zu hoher Stapelung leicht zur Beschädigung des oder der zuunterst liegenden Moduls bzw. Module führen.

Verpackte Module konnten deshalb selten in Stapelhöhen von mehr als 1 m transportiert werden, wobei wegen der Gefahr der Überbelastung unten liegender Module auch die Übereinanderstapelung von 2 beladenen Paletten unmöglich war, so dass die Ladehöhe eines LKW-Laderaums häufig nur teilweise genutzt werden konnte.

Ein wesentlicher weiterer Nachteil des Verpackens von Modulen mit Kartonage besteht darin, dass Kartonage sehr empfindlich gegenüber Feuchtigkeit ist und beispielsweise nicht einem Regen ausgesetzt werden darf, da sie im nassen Zustand keinerlei Stabilität bzw. Schutz mehr bieten kann.

Aufgrund dieser Nachteile wurden andere Lösungen zum Stapeln, Lagern und Transportieren von Modulen entwickelt.

Zum Beispiel ist aus Patent Abstracts of Japan Bd. 2000, Nr. 06, 22. September 2000 und JP 2000 079961 A, 21. März 2000 ein modulares Stecksystem zum sicheren Lagern und Transportieren von horizontal gestapelten Photovoltaik-Modulen (PV-Modulen) bekannt. Das System ist als Rahmenkonstruktion gestaltet, die durch vier vertikal verlaufende Säulen und diese verbindende horizontale Streben gebildet ist. Mehrere Rahmeneinheiten der Rahmenkonstruktion sind übereinander stapelbar und mittels einer Steckverbindung verbunden. Jede Rahmeneinheit weist vier Säulenabschnitte und diese verbindende horizontale Streben auf. Zum Zusammenstecken übereinander angeordneter Säulenabschnitte weist der jeweilige Säulenabschnitt oben einen Zapfen und unten eine Ausnehmung auf. Die Photovoltaik-Module sind in zwei der vier horizontalen Streben, und zwar in zwei parallel zueinander angeordneten Streben der jeweiligen Rahmeneinheit gelagert. Hierzu nehmen die beiden Streben Verschiebeteile auf, auf denen das Modul ruht. Der jeweilige Säulenabschnitt der Säule ist als glatter Stab mit den geformten Enden gestaltet.
Ferner ist aus der Europäischen Patentschrift EP 1617485 B1 der Anmelderin ein modulares Stecksystem zum sicheren Lagern und Transportieren von horizontal gestapelten Photovoltaik-Modulen (PV-Modulen) bekannt. Dieses System ist ausschließlich aus einzelnen vertikal angeordneten, lastabtragenden Säulen gebildet, die jeweils aus Formteil-Gliedern bestehen, die übereinander angeordnet und ineinander gesteckt die jeweilige Säule bilden. Jedes dieser Formteil-Glieder ist auf der Seite, die zu dem zu tragenden Photovoltaik-Modul hin gerichtet ist, mit einem lastaufnehmenden Tragprofil als Auflagevorrichtung für das Photovoltaik-Modul ausgestattet und besitzt oberseitig bzw. unterseitig einen oder mehrere Zapfen oder eine Feder und unterseitig bzw. oberseitig einen oder mehrere offene Hohlräume zur passgenauen Aufnahme der/des Zapfen(s) oder eine Nut zur Aufnahme der Feder.

Insbesondere für rahmenlose Module ist jedoch das Übereinanderstapeln horizontal ausgerichteter Module wenn überhaupt nur bedingt geeignet. Vor allem für relativ großflächige rahmenlose PV-Modulen besteht aufgrund der einwirkenden starken statischen und dynamischen Belastungen eine hohe Bruchgefahr. Daher werden rahmenlose PV-Module zum Lagern und Transportieren bevorzugt bei vertikaler Ausrichtung der Module nebeneinander gestapelt, so wie es auch bei Flachgläsern üblich ist.

Für das Nebeneinanderstapeln von Flachgläsern werden sowohl stationäre als auch mobile Regalkonstruktionen benutzt. Grundsätzlich wären solche Regalkonstruktionen auch für das Lagern und Transportieren von PV-Modulen und thermische Kollektormodulen nutzbar, aber diese Regalkonstruktionen könnten nur wenige dieser Module aufnehmen. Zudem könnten mehrere Module nicht einfach aneinandergelehnt werden, da jeder Modul in der Regel an einer Rückseite oder an einer Seite ein vorspringendes Anschlusselement, beispielsweise eine Anschlussdose oder eine Verrohrung, aufweisen kann. Zu berücksichtigen ist auch, dass ein leeres Regal trotzdem sehr sperrig und schwer ist und somit einen nicht unerheblichen Aufwand beim Transport erfordert.
Daher war bzw. ist es immer noch üblich, insbesondere vertikal auszurichtende Module für die Lagerung und insbesondere für den Transport in Kartonage zu verpacken. Hierfür gibt es speziell angepasste Kartons. Ein solcher Karton umfasst einen unteren Teil zur Aufnahme mehrerer vertikal ausgerichteter, Module sowie ein oberes Teil, welches als Deckel dient. Damit die vertikal ausgerichteten PV-Module in dem Karton nicht umfallen und gegeneinander schlagen, weisen wenigstens der Boden des unteren Teils sowie die Abdeckung des oberen Teils an der den PV-Modulen hingewandten Innenseite kammartige Einsätze, zum Beispiel aus Wellpappe, auf, wobei zwischen jeweils zwei zinkenartigen Vorsprüngen eines kammartigen Einsatzes ein PV-Modul positioniert ist. Die zinkenartigen Vorsprünge sind dabei breit genug, dass eine Berührung von zwei PV-Module auch unter Berücksichtigung ihrer rückseitig vorstehenden Anschlussdosen ausgeschlossen ist. Zur Einfacheren Handhabung befindet sich der gesamte Karton auf einer Transportpalette.

Die europäische Patentanmeldung EP 2 320 157 A2 der Anmelderin betrifft eine Halterung zum sicheren Lagern bzw. zum sicheren Transportieren von rahmenlosen PV-Modulen oder anderen flachen, quaderförmigen Körpern sowie ein modulares Stapelsystem umfassend mehrere derartige Halterungen, welches insbesondere zum Nebeneinanderstapeln vertikal ausgerichteter rahmenloser PV-Module oder anderer flacher, quaderförmiger Körper geeignet ist. Die Halterung umfasst einen Grundkörper aus einem ersten Material, der eine erste und zweite Seitenwand, wenigstens ein erstes und zweites Stützelement sowie wenigstens ein erstes und zweites Sicherungselement besitzt, und eine Pufferstruktur aus einem zweiten, gegenüber dem ersten, weicheren Material mit einer anhaftenden Wirkung. Die Pufferstruktur soll den Eckbereichsabschnitt des PV-Moduls bzw. des flachen, quaderförmigen Körpers, welcher in einem Spalt der Halterung aufnehmbar ist, polstern und fixieren.

Die Firma Eckpack-Service GmbH & Co. KG (http://www.eckpack.de) schlägt in der deutschen Patentanmeldung DE 10 2008 012 774 A1 vor, ein modulares Stecksystem, ähnlich dem der Europäischen Patentschrift EP 1617485 B1 der Anmelderin, nicht nur zum Übereinanderstapeln horizontal ausgerichteter PV-Module einzusetzen, sondern dass damit auch Stapel von vertikal ausgerichteten und nebeneinander angeordneten PV-Modulen erzeugbar sind. Dazu werden die einzelnen PV-Module zunächst an ihren vier Ecken mit jeweils einem Formteil-Glied dieses modularen Stecksystems versehen und dann in horizontaler Ausrichtung übereinander gestapelt, bevor schließlich der gesamte Stapel gedreht wird, so dass die PV-Module in dem Stapel nunmehr vertikal ausgerichtet sind.

Ein Formteil-Glied dieses modularen Stecksystems ist an gerahmte Module angepasst und daher ausgebildet, mit seinem Federarm den Rahmen eines gerahmten PV-Moduls zu übergreifen und hinter dem Rahmen einzurasten. An einem rahmenlosen Modul würde ein derartiges Formteil-Glied jedoch keinen Halt finden, so dass dieses modulare Stecksystem nicht für das Nebeneinanderstapeln von vertikal ausgerichteten, rahmenlosen PV-Modulen verwendbar ist.

Bei der von Eckpack vorgeschlagenen Lösung ist zudem ein mit diesem modularen Stecksystem gebildeter Stapel von vertikal ausgerichteten und nebeneinander angeordneten PV-Modulen relativ instabil, wenn er nicht durch zusätzlich umlaufende Spanngurte bzw. -bänder zusammengehalten und gegen ein Verrutschen bzw. Auseinanderfallen insbesondere längs der Stapelrichtung gesichert wird.

Bei der von Eckpack vorgeschlagenen Lösung wären in Bezug auf rahmenlose PV-Module ferner die Ecken und Kanten jedes vertikal ausgerichteten PV-Moduls im Stapel, insbesondere die unteren Ecken- und Kantenbereiche, auf denen das jeweilige Modul aufliegt und auf denen somit das gesamte Gewicht des Moduls lastet, nur unzureichend gegen etwaige Beschädigungen geschützt. Dies könnten lediglich oberflächige Beschädigungen wie zum Beispiel Kratzer sein, die aufgrund der Vibrationen während des Transports entstehen, wenn die von Formteil-Gliedern umgebenen Ecken- und Kantenbereiche der rahmenlosen PV-Module gegen die Formteil-Glieder reiben. Es bestünde aber auch die Gefahr, dass es aufgrund von Stößen während des Transports zum Abplatzen oder Absplittern von Bruchteilen kommt.

Als eine zu lösende Aufgabe ergab sich daher aus den hier dargelegten Betrachtungen, ein neues, einfach herzustellendes System zum sicheren Haltern, Lagern und/oder Transportieren von Photovoltaik-Modulen (PV-Modulen) und/oder thermischen Kollektormodulen, entweder mit oder ohne einem Rahmen zu schaffen.

Die erfindungsgemäße Lösung ist durch eine Halterung und ein modulares Stapelsystem mit den Merkmalen des jeweiligen unabhängigen Anspruchs gegeben.

Vorteilhafte und/oder bevorzugte Ausführungsformen und Weiterbildungen sind Gegenstand der jeweiligen abhängigen Ansprüche.

So ist zum einen erfindungsgemäß eine Halterung zum sicheren Haltern, Lagern und/oder Transportieren von Modulen vorgesehen, wobei diese Halterung aber ebenso für andere flache, quaderförmige Körper wie Glasscheiben, Türblätter, Tisch-, Möbel- oder Steinplatten geeignet ist, wobei deren Ausmaß in Länge, Breite und Dicke vorzugsweise jeweils durch drei Seitenlängen definiert ist, wobei die Dicke durch die kürzeste der drei Seitenlängen definiert ist. Eine derartige Halterung hat einen Grundkörper aus einem ersten Material, mit einer ersten Seitenwand, die längs einer Schnittgeraden mit einer zweiten Seitenwand in einem Verbindungswinkel von im Wesentlichen 90 Grad verbunden ist, so dass die Seitenwände L-förmig miteinander verbunden sind und insbesondere eine keilartige Form des Grundkörpers definiert ist. Jede der Seitenwände hat eine Innenfläche, die sich jeweils längs zur Schnittgeraden zwischen einem ersten zur Schnittgeraden senkrechten Rand und einem zweiten zur Schnittgeraden senkrechten Rand erstreckt. Auch zwischen diesen Innenflächen der Seitenwände besteht bevorzugt ein rechter Winkel. Zudem hat jede der Seitenwände an deren Außenseite eine erste Stoßfläche, die an dem ersten Rand eine erste Kante mit der Innenfläche bildet, sowie eine zweite Stoßfläche, die an dem zweiten Rand eine zweite Kante mit der Innenfläche bildet. Der erste bzw. der zweite Rand ist jeweils an die Innenfläche der ersten bzw. der zweiten Seitenwand angeformt, wobei durch den ersten und den zweiten Rand und einen sich zwischen den ersten und zweiten Rändern über die Innenflächen der Seitenwände erstreckenden ersten Innenflächenbereich ein Spalt gebildet ist.

Weiterhin umfasst der Grundkörper wenigstens ein erstes und wenigstens ein zweites Sicherungselement, wobei das wenigstens eine erste Sicherungselement aufseiten der ersten oder zweiten Seitenwand wirkt und dort angeordnet ist, und wobei das wenigstens eine zweite Sicherungselement entgegengesetzt passend zu dem wenigstens einem ersten Sicherungselement ausgebildet ist, das heißt komplementär zu dem ersten Sicherungselement ausgebildet ist, und ebenfalls aufseiten der ersten oder zweiten Seitenwand wirkt und an der ersten oder zweiten Seitenwand angeordnet ist. Eine solche erfindungsgemäße Halterung ist bevorzugt aufseiten der ersten Stoßflächen sowie aufseiten der zweiten Stoßflächen jeweils mit einer weiteren entsprechend ausgerichteten, gleichartigen Halterung lösbar verbindbar, derart, dass die Schnittgeraden der Halterungen in einer gemeinsamen Achse liegen, wobei das wenigstens eine erste und das wenigstens eine zweite Sicherungselement erfindungsgemäß derart ausgebildet sind, dass sie im Zusammenwirken mit dem jeweils entgegengesetzt passenden Sicherungselement der weiteren Halterung die verbundenen Halterungen gegen ein Verrutschen quer zur gemeinsamen Achse und/oder gegen ein Verrutschen längs der gemeinsamen Achse sichern.

Dabei ist der Spalt zur Aufnahme und Stützung eines Eckbereichsabschnitts eines zu lagernden und/oder zu transportierenden Moduls oder eines anderen flachen, quaderförmigen Körpers ausgebildet, das bzw. der mit der seine Dicke definierenden Seite parallel zur Schnittgeraden ausgerichtet ist. Der Eckbereichsabschnitt des Moduls bzw. des flachen, quaderförmigen Körpers ist somit in dem Spalt gepolstert und/oder insbesondere fixiert, sofern die Dicke des Moduls bzw. des flachen, quaderförmigen Körpers im Wesentlichen der Weite des Spalts entspricht. Aufgrund der erfindungsgemäßen Anordnung der Sicherungselemente an den Seitenwänden können somit die Ränder, zwischen denen der Spalt gebildet ist, im Gegensatz zu Lösungen nach dem Stand der Technik wesentlich schmaler ausgebildet sein, um ein Modul noch sicher darin aufnehmen zu können.

Zum Anderen ist erfindungsgemäß ein modulares Stapelsystem zum sicheren Lagern und/oder Transportieren von Modulen oder anderen flachen, quaderförmigen Körpern vorgesehen. Ein derartiges Stapelsystem umfasst wenigstens eine erste, wenigstens eine zweite, wenigstens eine dritte und wenigstens eine vierte erfindungsgemäße Halterung, wobei die zweite gegenüber der ersten Halterung, die dritte gegenüber der zweiten Halterung und die vierte gegenüber der dritten Halterung jeweils um 90 Grad um die Achse ihrer Schnittgeraden gedreht anordenbar ist, zur Aufnahme jeweils eines Abschnitts eines der vier Eckbereiche eines Moduls oder eines anderen flachen quaderförmigen Körpers in den Spalt jeder der Halterungen. Zudem sind die wenigstens eine erste, die wenigstens eine zweite, die wenigstes eine dritte und die wenigstens eine vierte Halterung mit entsprechend ausgerichteten weiteren gleichartigen ersten, zweiten, dritten und vierten Halterungen lösbar verbindbar, und zwar derart, dass die Schnittgeraden aller ersten, zweiten, dritten und vierten Halterungen jeweils in einer gemeinsamen Achse liegen, und dass die jeweils verbundenen Halterungen durch das Zusammenwirken ihrer Sicherungselemente gegen ein Verrutschen quer zur gemeinsamen Achse und/oder gegen ein Verrutschen längs der gemeinsamen Achse der Schnittgeraden gesichert sind.

Das Material des Grundkörpers, ist bevorzugt ein Kunststoff oder ein Metall.

Dank der Halterung sind die Ecken- und Kantenbereiche der Module bzw. der anderen flachen, quaderförmigen Körper bei vertikaler Ausrichtung innerhalb eines mit dem modularen Stapelsystem gebildeten Stapels vor Beschädigungen deutlich besser geschützt, und zwar nicht nur vor oberflächigen Beschädigungen wie Kratzern sondern auch vor dem Abplatzen oder Absplittern von Bruchteilen. Denn einerseits fixiert die Halterung das Modul in dem Spalt, das heißt sie vermeidet ein Spiel zwischen dem Modul und der Halterung und ein Reiben des Moduls an einer Halterung. Andererseits polstert die Halterung das Modul in dem Spalt, das heißt sie federt Stöße ab, die zum Beispiel durch hartes Absetzen mit dem Gabelstapler oder beim LKW-Transport durch Erschütterungen beim Fahren über Schwellen und Schlaglöcher verursacht sein können und verringert somit die auf das Modul einwirkende dynamische Belastung.

Der Spalt kann je nach Ausführungsform insgesamt eine gleichmäßige oder eine unterschiedliche Weite aufweisen. Die Innenfläche des Spalts kann aber beispielsweise auch insgesamt oder teilweise eine gewellte oder eine strukturierte Oberfläche haben. Eine weitere Möglichkeit ist, das die Weite des Spalts in eine Richtung ab- bzw. zunimmt.

Gemäß einer besonders bevorzugten Ausführungsform ist die Eingangsöffnung des Spalts zunächst dünner und nimmt dann in Richtung der Seitenwände an Dicke zu. Da die Weite des Spalts erst allmählich enger wird, ergibt sich daraus ein vorteilhafter Trichtereffekt, der das Einsetzen eines Eckbereichsabschnitts zum Beispiel eines Moduls in den Spalt einer Halterung bzw. das Aufstecken einer Halterung mit dem Spalt auf einen Eckbereich eines Moduls wesentlich erleichtert.

Neben dem Polstern und/oder Fixieren eines Eckbereichsabschnitts eines Moduls oder eines anderen flachen quaderförmigen Körpers in dem Spalt einer erfindungsgemäßen Halterung dient eine erfindungsgemäße Halterung mit einer bevorzugt anhaftenden Wirkung ihres Materials ferner dazu, dass die Halterung auch ohne irgend einen Einrastmechanismus an der relativ glatten Oberfläche eines rahmenlosen Moduls bzw. einer Glasscheibe, Steinplatte und dergleichen einen guten, zumindest aber rüttelfesten Halt findet, und nur mit einer entsprechend größeren Zugkraft wieder von dem Eckbereichsabschnitt des Moduls bzw. des flachen, quaderförmigen Körpers lösbar ist. Somit bietet die erfindungsgemäße Halterung einen weiteren wesentlichen Vorteil gegenüber dem Stand der Technik.

Die Sicherungselemente sind bevorzugt dergestalt, dass das erste und das zweite Sicherungselement wenigstens teilweise an der Außenfläche der ersten oder an der Außenfläche der zweiten Seitenwand angeordnet ist, so dass das erste Sicherungselement mit dem zweiten Sicherungselement einer entsprechend ausgerichteten weiteren Halterung lösbar verbindbar ist, derart, dass die ersten Stoßflächen der Halterung auf den zweiten Stoßflächen der weiteren Halterung aufliegen und die Schnittgeraden der Halterungen in einer gemeinsamen Achse liegen.

Zweckmäßig ist bzw. sind eines oder mehrere der ersten und zweiten Sicherungselemente wenigstens teilweise an der ersten und/oder zweiten Seitenwand und/oder an der ersten und/oder zweiten Stoßfläche angeformt.

In eine besonders bevorzugten Ausführungsform einer Halterung gemäß der Erfindung bildet ein erstes und/oder ein zweites Sicherungselement wenigstens teilweise die erste und/oder zweite Seitenwand.

In einer weiteren Ausgestaltung der Erfindung weist wenigstens derjenige Teil des ersten und/oder des zweiten Sicherungselements, der die erste und/oder eine zweite Seitenwand bildet, eine Innenfläche auf, welche zumindest teilweise in einer Ebene parallel und/oder quer zur Ebene der übrigen Innenfläche der Seitenwand gerichtet ist, an der dieses Sicherungselement angeordnet ist..

Ferner kann das wenigstens eine erste Sicherungselement bzw. das wenigstens eine zweite Sicherungselement als Zapfen oder als Feder ausgebildet sein, und das wenigstens eine zweite Sicherungselement bzw. das wenigstens eine erste Sicherungselement als offener Hohlraum zur passgenauen Aufnahme des Zapfens einer entsprechend ausgerichteten weiteren gleichartigen Halterung oder als Nut zur passgenauen Aufnahme der Feder einer entsprechend ausgerichteten weiteren gleichartigen Halterung ausgebildet sein.

Bevorzugt ist wenigstens ein Zapfen oder eine Feder an der ersten Seitenwand und/oder an der zweiten Seitenwand ausgebildet und der entgegengesetzt passend ausgebildete offene Hohlraum oder die entgegengesetzt passend ausgebildete Nut befindet sich an wenigstens einer ersten Seitenwand und/oder an einer zweiten Seitenwand. Bei miteinander verbundenen Halterungen dieser Ausführungsform steckt dann jeweils ein Zapfen bzw. eine Feder der einen Halterung passgenau in jeweils einem offenen Hohlraum bzw. einer Nut der anderen Halterung. Die durch diese Steckverbindung miteinander verbundenen Halterungen sind durch ihre Sicherungselemente gegen ein Verrutschen quer zur gemeinsamen Achse der Schnittgeraden gesichert.

Gemäß einer weiteren besonders bevorzugten Ausführungsform ist das Querschnittsprofil des ersten und zweiten Sicherungselements trapezförmig oder weist die Form eines Parallelogramms auf.

Bei miteinander verbundenen Halterungen dieser vorteilhaften Ausführungsform hintergreift dann eine Auskragung in der einen Halterung die Feder oder den Zapfen der anderen Halterung derart, dass die Feder formschlüssig in der durch die Auskragung gebildeten Nut oder des Hohlraums sitzt. Derart miteinander verbundene Halterungen sind durch ihre Sicherungselemente gegen eine Verrutschen quer der gemeinsamen Achse ihrer Schnittgeraden besonders gesichert und weisen zudem einen erhöhten Reibschluss auf, so dass diese Sicherungselemente gegen eine Verrutschen auch längs der gemeinsamen Achse ihrer Schnittgeraden besonders gesichert sind.

Darüber hinaus sei zu erwähnen, dass insbesondere eine Reibschlussverbindung besonders dadurch verstärkt wird, wenn in den Eckbereichen einer erfindungemäßen Halterung gehalterte Module vertikal, das heißt nebeneinander gestapelt werden. Da die ersten und zweiten Sicherungselemente an der Außenfläche einer ersten und/oder zweiten Seitenwand angeordnet sind und auf einem Untergrund, beispielsweise einer Transport-Palette oder einem Karton aufliegen können, lastet somit die Gewichtskraft der Module auf den miteinander in Eingriff stehenden Sicherungselementen auf und verformt diese somit elastisch und/oder plastisch.

In einer weiteren Ausführungsform der Erfindung sind daher zur Verbesserung bzw. zur Ebnung der Auflage einer erfindungsgemäßen Halterung auf einem Untergrund weitere Abstandselemente an der Außenfläche der ersten und oder zweiten Seitenwand angeordnet, welche zur Verbesserung der Dämpfwirkung beim Transport auch mit einem Material beschichtet oder hieraus bestehen können, welches plastische oder elastische Eigenschaften aufweist.

Um die Halterungen wieder voneinander lösen zu können, ist zumindest zur Überwindung der Reibkräfte eine längs der gemeinsamen Achse der Schnittgeraden auszuführende Bewegung der Halterungen zueinander erforderlich. Bereits die bevorzugt anhaftende Wirkung und/oder der Oberflächenstrukturierung der Innenflächen in dem Spalt jeder Halterung trägt zudem dazu bei, dass ein Verrutschen der zum Beispiel innerhalb eines Stapels miteinander verbundener Halterungen quer zur gemeinsamen Achse der Schnittgeraden zumindest erschwert ist, wenn sich in ihrem Spalt jeweils ein Eckbereichsabschnitt etwa von nebeneinander gestapelten Modulen befindet.

Ein mit Hilfe des erfindungsgemäßen modularen Stapelsystems unter Verwendung von Halterungen mit derartigen Sicherungselementen gebildeter Stapel von in vertikaler Ausrichtung nebeneinander angeordneten Modulen, ist derart stabil und vor einem Auseinanderfallen bzw. einem Verrutschen wenigstens längs der Stapelrichtung gesichert, dass dieser zumindest während der Lagerung nicht zwingend von zusätzlich umlaufenden Spanngurten bzw. -bändern zusammengehalten werden muss.

Um miteinander verbundene Halterungen zusätzlich zur zuvor beschriebenen Wirkung auch gegen ein Verrutschen quer und/oder längs zur gemeinsamen Achse der Schnittgeraden zu sichern, sind bei einer besonders bevorzugten Ausführungsform der Halterung das erste oder ein weiteres erstes Sicherungselement sowie das zweite oder ein weiteres zweites Sicherungselement entsprechend geeignet ausgebildet.

So ist das erste, zweite oder ein weiteres Sicherungselement beispielsweise mit einer Rastnase ausgebildet, die, wenn Halterungen miteinander verbunden sind, in eine Ausnehmung der weiteren Halterung und/oder eines Sicherungselements eingreift und hinter einer Kante in seinem Inneren einrastet. Um derart miteinander verbundene Halterungen wieder voneinander lösen zu können, ist beispielsweise mit einem Finger oder einem geeigneten Werkzeug die Rastnase zurückzubiegen.

In einer weiteren Ausführungsform einer erfindungsgemäßen Halterung ist die erste und/oder die zweite Seitenwand in dem Bereich, in dem die erste mit der zweiten Seitenwand längs der Schnittgeraden verbunden ist, teilweise mit einer Öffnung versehen, so dass bei der Fertigung ein Spritzgusswerkzeug über diese Öffnung in den Eckbereich eines Moduls einfahren kann, um beispielsweise einen Federarm an das Modul anzuformen, welcher den Rahmen eines gerahmten Moduls übergreift und hinter dem Rahmen einrastet, insbesondere in einem Eckbereich des Moduls. Ferner kann eine derartige Öffnung auch dazu dienen, dass beim Halten bzw. beim Transport eines Moduls ein Anschlusselement durch dies Öffnung ragen kann und somit von äußeren Kräften geschützt ist, welche auf die Halterung wirken.

Es sei hinsichtlich der Sicherungselemente erwähnt, dass solange die ersten und zweiten Sicherungselemente entgegengesetzt passend ausgebildet sind, es im Wesentlichen frei festlegbar ist, ob zum Beispiel ein als Zapfen oder Feder ausgebildetes Sicherungselement aufseiten der ersten Seitenwand und entsprechend ein als offener Hohlraum oder Nut ausgebildetes Sicherungselement aufseiten der zweiten Seitenwand wirkt oder umgekehrt.

Gemäß einer weiteren Ausführungsform kann der Grundkörper weitere Stützelemente umfassen. Sofern es mehrere Stützelemente gibt, sind diese derart an die eine oder die andere Innenfläche der Seitenwände oder der Ränder angeformt.
Bevorzugt ist wenigstens eines der Stützelemente an die Innenflächen beider Seitenwände angeformt, um die Seitenwände und/oder die Ränder des Grundkörpers der Halterung gegeneinander zu stützen und somit die Stabilität der Halterung selbst zu erhöhen.

Zweckmäßiger Weise sind die ersten Ränder wenigstens teilweise von den zweiten Rändern der Innenflächen der Seitenwände derart längs der Schnittgeraden beabstandet, dass die Innenflächen breiter sind, als der Spalt zur Aufnahme eines Eckbereichsabschnitts eines Moduls weit ist, so dass die die Innenflächen einen zweiten Innenflächenbereich außerhalb des Spalts aufweisen. Eine derartig ausgebildete Halterung ist auch für ein Modul oder einen anderen flachen, quaderförmigen Körper geeignet, das bzw. der mit einem Eckbereichsabschnitt zwar in den Spalt passt, das bzw. der jedoch an einem anderen Bereich als einem seiner Eckbereiche einen Vorsprung besitzt, der sich im Wesentlichen parallel zur Schnittgeraden, jedoch nicht über den zweiten Innenflächenbereich hinaus erstreckt. Bei einem Modul kann ein solcher Vorsprung zum Beispiel eine Anschlussdose sein, die sich auf der Rückseite des Moduls befindet.

Darüber hinaus liegt es selbstverständlich im Rahmen der Erfindung, dass, wenn die Innenflächen wenigstens teilweise breiter sind als der Spalt zur Aufnahme eines Eckbereichsabschnitts eines Moduls weit ist, die Innenflächen einen zweiten Innflächenbereich auf der einen Seite außerhalb des Spalts sowie einen zusätzlichen dritten Innenflächenbereich auf der anderen Seite außerhalb des Spalts aufweisen, so dass eine derartig ausgeführte Halterung auch für flache quaderförmige Körper verwendbar ist, die auf ihrer Vorder- und Rückseite eine Anzahl von sich im Wesentlichen parallel zur Schnittgeraden erstreckenden Vorsprüngen aufweisen.

In jedem Fall hängt die Eignung einer Halterung für ein Modul oder einen anderen flachen, quaderförmigen Körper bestimmter Dicke einerseits von der Spaltweite der Halterung ab, und andererseits davon, ob die Innenflächen der Seitenwände und damit die Seitenwände selbst breit genug sind, damit gegebenenfalls noch vorhandene Vorsprünge an der Vorder- und/oder Rückseite des Moduls bzw. des flachen, quaderförmigen Körpers nicht darüber hinausragen.

Ergänzend kann bei einer Halterung, deren Innenflächen wenigstens teilweise breiter sind, als der Spalt zur Aufnahme eines Eckbereichsabschnitts eines Moduls weit ist und somit einen zweiten bzw. dritten Innenflächenbereich außerhalb des Spalts aufweisen, wenigstens ein Stützelement vorhanden sein, um die Seitenwände und/oder die Ränder des Grundkörpers der Halterung zu stützen und somit die Halterung in sich weiter zu stabilisieren.

Bevorzugt bildet der erste und/oder zweite Rand, der an die Innenflächen beider Seitenwände angeformt ist, eine durchwegs geschlossene oder eine teils offene Wand aus, die sich zwischen den Innenflächen der Seitenwände erstreckt. Gemäß einer besonders bevorzugten Ausführungsform hat wenigstens eine der Stoßflächen des Grundkörpers der Halterung wenigstens einen, insbesondere runden, Durchbruch. Eine Halterung gemäß dieser Ausführungsform kann neben dem Lagern und Transportieren von Modulen auch zur Montage von Modulen am Installationsort genutzt werden, da sie zum Beispiel ein direktes Festschrauben der Halterung an einer Unterlage erlaubt. Somit ist also ein Modul, das an seinen Ecken mit je einer derartigen Halterung versehen ist, auf einfache Weise etwa an einer Fassade oder auf einem Dach montierbar, wobei vorteilhafter Weise zur Montage dieselben Halterungen verwendbar sind, in denen das Modul bereits während des Transports im Stapel gehalten wurde.

Ergänzend oder alternativ zu dem wenigstens einen Durchbruch weist bevorzugt wenigstens eine der Seitenwände des Grundkörpers der Halterung an wenigstens einer ihrer Stoßflächen eine insbesondere rechteckige oder trapezförmige Vertiefung auf. Eine Halterung gemäß dieser Ausführungsform kann ebenfalls neben dem Lagern und Transportieren von Modulen auch zur Montage von Modulen am Installationsort genutzt werden, wobei die Halterung ein indirektes Festschrauben bzw. ein Festklemmen an einer Unterlage mittels einer Klemmvorrichtung, wie einem Z-Winkel bzw. Z-Profil oder einem Hutprofil, erlaubt. Zur Montage der Halterung wird beispielsweise ein Z-Profil mit dessen unteren Flansch bzw. unterer Abkantung an einem Trägerprofil festgeschraubt, wobei der obere Flansch bzw. die obere Abkantung die Stoßfläche an der Vertiefung übergreift und die Halterung an das Trägerprofil presst. Da die Kontur der Vertiefung im Wesentlichen der Kontur des Flansches entspricht, erleichtert die Vertiefung einerseits das richtige Positionieren von Klemmvorrichtung und Halterung bei der Montage und erschwert andererseits ein Verrutschen der Halterung nach der Montage.

Sofern die Halterung vorteilhafter Weise an wenigstens einer der Seitenwände des Grundkörpers sowohl einen Durchbruch zwischen den Stoßflächen als auch eine Vertiefung an einer Stoßfläche hat, erlaubt sie folglich eine Montage wahlweise durch Festschrauben oder Festklemmen.

Befindet sich der Durchbruch besonders vorteilhaft im Gebiet der Vertiefung an einer Stoßfläche, so ist zudem ein besonders verrutschungssicheres Festklemmen der Halterung an einer Unterlage möglich. Hierzu bedarf es einfach einer Klemmvorrichtung, deren oberer Flansch, welcher die Stoßfläche der Halterung an der Vertiefung übergreift, an seiner Unterseite eine Nase hat, die passgenau in den Durchbruch eingreift.

Zweckmäßig wird eine der vorbeschriebenen Ausführungsformen einer erfindungsgemäßen Halterung in einem Spritzgussverfahren hergestellt.

Weitere Merkmale und/oder Vorteile der Erfindung sind in der nachfolgenden Beschreibung, die sich insbesondere auf die die Figuren bezieht, sowie in den Figuren selbst dargestellt, wobei angemerkt wird, dass alle Einzelmerkmale und alle Kombinationen von Einzelmerkmalen weitere erfinderische Ausgestaltungen darstellen.

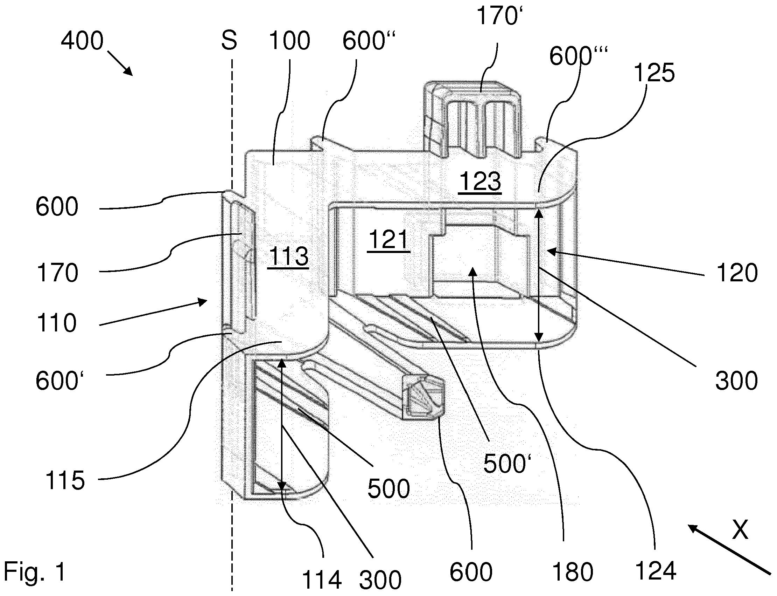

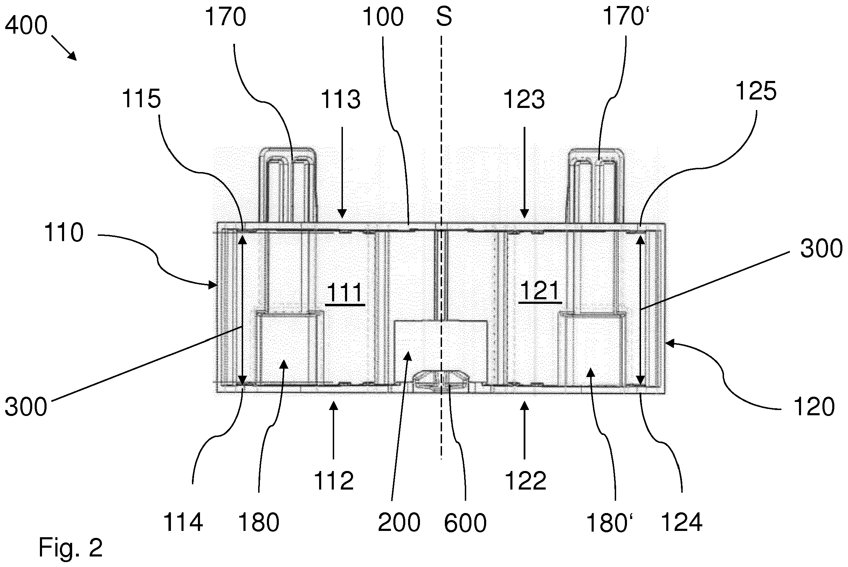

In den Figuren 1 und 2 ist die Erfindung in mehreren Ausführungsbeispielen dargestellt, ohne jedoch hierauf beschränkt zu sein. Im Einzelnen zeigt:
- Figur 1:: den Grundkörper 100 einer ersten Ausführungsform der Halterung 400 in einer räumlichen Ansicht, schräg auf die ersten Stoßflächen 113 und 123 und die Innenflächen 121 der zweiten Seitenwand, und
- Figur 2:: eine Seitenansicht des Grundkörper 100 der Halterung 400 in der Ausführungsform gemäß Figur 1 in Blickrichtung X.

Die Figuren 1 und 2 zeigen den Grundkörper 100 einer ersten Ausführungsform der Halterung 400 zum, insbesondere sicheren, Haltern, Lagern und/oder Transportieren von gerahmten oder ungerahmten Modulen oder anderen Körpern, die flach und quaderförmig sind und deren Ausmaß insbesondere durch drei Seiten definiert ist, wie zum Beispiel Flachgläser, Türblätter, Tisch-, Möbel- oder Steinplatten. Dabei ist nach dem Verständnis dieser Anmeldung die Dicke dieser flachen, quaderförmigen Körper insbesondere durch deren kürzeste Seite definiert.

Der Grundkörper 100 hat gemäß Figur 1 eine erste Seitenwand 110, die längs einer Schnittgeraden S, die in den Figuren als gestrichelte Linie angedeutet ist, mit einer zweiten Seitenwand 120 in einem Verbindungswinkel von 90 Grad verbunden ist. Durch diese zwei L-förmig miteinander verbundenen Seitenwände 110, 120 ist somit die im Wesentlichen keilartige Form des Grundkörpers 100 definiert.

Figur 2 zeigt die Innenfläche 111 der Seitenwand 110 und die Innenfläche 121 der Seitenwand 120, welche sich jeweils längs zur Schnittgeraden S zwischen einem ersten zur Schnittgeraden S senkrechten Rand 114 bzw. 124 und einem zweiten zur Schnittgeraden S senkrechten Rand 115 bzw. 125, wobei auch zwischen den Innenflächen 111 und 121 ebenfalls ein rechter Winkel besteht, was jedoch nicht zwingend erforderlich ist.

Ferner haben die Seitenwände 110 und 120 erste Stoßflächen 112 und 122, die an den ersten Rändern 114 und 124 eine erste Kante mit den Innenflächen 111 und 121 bilden, wobei die ersten Stoßflächen 112 und 122 aufgrund der Perspektive in der Figur 1 nicht zu sehen sind, jedoch in der Figur 2. An den zweiten Rändern 115 und 125 bilden die Innenflächen 111 und 121 eine zweite Kante mit den zweiten Stoßflächen 113 und 123 der Seitenwände 110 und 120.

Der erste Rand 114 bzw. 124 ist von dem zweiten Rand 115 bzw. 125 längs der Schnittgeraden S beabstandet. Beide Ränder 114 bzw. 124 und 115 bzw. 125 sind in dieser Ausführungsform der Halterung 400 zugleich an beide Innenflächen 111 und 121 angeformt und bilden jeweils eine Ober- und Unterseite des Grundkörpers.

Zum Einen bilden der erste Rand 114 bzw. 124 und der zweite Rand 115 bzw. 125 mit dem Innenflächenbereich, welcher sich zwischen den Innenflächen 111 und 121 erstreckt, einen Spalt 300 zur Aufnahme und Stützung eines Eckbereichsabschnitts eines zu lagernden und/oder zu transportierenden Moduls oder eines anderen flachen, quaderförmigen Körpers. Ein Modul oder flacher, quaderförmiger Körper ist hierzu mit der seine Dicke definierenden Seite parallel zur Schnittgeraden S auszurichten, wobei durch die Weite des Spalts 300, also den Abstand zwischen dem ersten und dem zweiten Rand 114 bzw. 124 und 115 bzw. 125, die maximale Dicke eines aufnehmbaren Körpers vorgegeben ist.

Zum Anderen dienen der erste und der zweite Rand 114 bzw. 124 und 115 bzw. 125 in dieser Ausführungsform der Halterung 400 auch zur Stützung der Seitenwände 110 und 120 und somit zur weiteren Stabilisierung der Halterung 400.

Die Figur 1 zeigt, dass den Spalt 300 umgebene Flächen einzelne Oberflächenstrukturen bzw. Erhebungen 500 und 500' aufweisen, dank derer ein Modul besseren Halt in dem Spalt 300 findet oder darin gedämpft werden können, wenn diese Erhebungen 500, 500' elastische oder plastische Eigenschaften aufweisen. Alternativ können diese Erhebungen als Gleitauflage für ein Modul fungieren.

Es wird jedoch angemerkt, dass auch andere Ausführungsformen der Halterung 400 vorgesehen sind, bei denen je nach Art und Form an den Spalt 300 umgebenen Flächen entsprechend anders als in Figur 1 gezeigt ausgestaltet sein können. Ferner sind Ausführungsformen der Halterung 400 möglich, bei denen die den Spalt 300 umgebenen Flächen keinerlei Vertiefungen oder Erhebungen aufweisen.

Weiterhin umfasst der Grundkörper 100 gemäß der Figuren 1 und 2 erste Sicherungselement 170 und 170' und hierzu komplementär ausgebildete zweite Sicherungselemente 180 und 180'. Das erste Sicherungselement 170 und das zweite Sicherungselement 180 ist im Wesentlichen an der Außenfläche der ersten Seitenwand 110, und das erste Sicherungselement 170' und das zweite Sicherungselement 180' ist im Wesentlichen an der Außenfläche der zweiten Seitenwand 120 angeordnet. In der bevorzugten Ausführungsform nach den Figuren 1 und 2 sind diese Sicherungselemente 170, 170', 180 und 180' an die Außenfläche der ersten und zweiten Seitenwand 110, 120 angeformt, wobei diese an auch andersartig angefügt sein können.

Zweckmäßig sind die ersten Sicherungselemente 170 und 170' als Zapfen und/oder auch teilweise an den zweiten Stoßflächen 113 und 123 bzw. and den Rändern 115 und 125 ausgebildet. Gemäß einer Ausführungsform weisen die Zapfen das Profil eines Parallelogramms auf. Alternativ sind auch andere Profile der Zapfen möglich. Darüber hinaus können anstelle von Zapfen auch Federn zur Anwendung kommen.

Die zweiten Sicherungselemente 180 und 180' gemäß der Ausführungsform nach den Figuren 1 und 2 sind zu den ersten Sicherungselementen 170 und 170' komplementär und als Hohlraum ausgebildet. Dementsprechend weisen diese ebenfalls das Profil eines Parallelogramms auf. Ferner sind diese Hohlräume ausschließlich an den Außenflächen der ersten und zweiten Seitenwand 110, 120 angeordnet, das heißt angeformt. In einer alternativen Ausführungsform können die Sicherungselemente 180 und 180' jedoch auch teilweise an den ersten Stoßflächen 112 und 122 angeordnet sein, beispielsweise durch eine Öffnung in der ersten Stoßfläche 112 und 122. Ferner können die zweiten Sicherungselemente 180, 180' auch als Nut ausgebildet sein um erste Sicherungselemente aufzunehmen, die als Feder ausgebildet sind.

Wie insbesondere der Figur 1 zu entnehmen ist, bilden das erste und das zweite Sicherungselement 170, 170' und 180, 180' zweckmäßig teilweise die erste und zweite Seitenwand 110, 120 aus. Diejenigen Teile des ersten und zweiten Sicherungselements 170, 170' und 180, 180', welche die erste und zweite Seitenwand 110, 120 bilden, weisen daher Innenflächen auf, welche teilweise in einer Ebene parallel und teilweise quer zur Ebene der übrigen Innenfläche der entsprechenden Seitenwände 110, 120 gerichtet sind, an denen dieses Sicherungselement angeordnet ist.

Zusätzlich zu den Sicherungselementen 170, 170' und 180, 180' kann der Grundkörper 100 der Halterung 400 einer Ausführungsform gemäß der Figuren 1 und 2 weitere Sicherungselemente aufweisen.

So kann das erste, zweite oder ein weiteres Sicherungselement beispielsweise mit einer Rastnase ausgebildet sein, die, wenn mehrere Halterungen miteinander verbunden sind, in eine Ausnehmung der weiteren Halterung und/oder eines ersten, zweiten oder weiteren Sicherungselements eingreift und hinter einer Kante in seinem Inneren einrastet. Um derart miteinander verbundene Halterungen wieder voneinander lösen zu können, ist beispielsweise mit einem Finger oder einem geeigneten Werkzeug die Rastnase zurückzubiegen.

Bezüglich der Figur 1 ist noch zu erwähnen, dass bei anderen Ausführungsformen der Halterung 400 die Sicherungselemente auch anders als hier gezeigt ausgebildet sein können. Allerdings stellt die Ausbildung des ersten Sicherungselements 170, 170' als Zapfen und des zweiten Sicherungselements 180, 180' als Hohlraum eine als besonders stabil erachtete Variante dar.

Die in den Figuren 1 und 2 dargestellte Ausführungsform einer erfindungsgemäßen Halterung kann darüber hinaus erste und zweite Sicherungselemente 170, 170' und 180, 180' aufweisen, welche eine ebene Oberfläche aufweisen, die vorzugsweise zu der Außenfläche der Seitenwand, an welcher ein jeweiliges Sicherungselement angeordnet ist, bevorzugt parallel ist, so dass eine derartig ausgebildete Halterung, die ein Modul vertikal aufnimmt, auf dieser Oberfläche flächig auf einem Untergrund abgelegt bzw. aufgestellt werden kann.

In einer weiteren Ausführungsform der Erfindung sind zur Verbesserung bzw. zur Ebnung der Auflage einer erfindungsgemäßen Halterung auf einem Untergrund weitere Abstandshalter an der Außenfläche der ersten und oder zweiten Seitenwand angeordnet, welche zur Verbesserung der Dämpfwirkung beim Transport auch mit einem Material beschichtet oder hieraus bestehen können, welches plastische oder elastische Eigenschaften aufweist.

In einer weiteren alternativen oder ergänzenden Ausgestaltung der Erfindung weist eine Halterung wenigstens einen der in der Figur 1 gezeigten Abstandshalter 600, 600', 600'', 600''' an der Außenfläche der ersten und/oder der zweiten Seitenwand 110, 120 auf.

Ferner kann eine erfindungsgemäße Halterung einen wie in Figur 1 gezeigten Federarm 600 aufweisen, um gerahmte Module aufzunehmen und daher ausgebildet ist, mit seinem Federarm den Rahmen eines gerahmten Moduls zu übergreifen und hinter dem Rahmen einzurasten, insbesondere in einem Eckbereich des Moduls.

Darüber hinaus ist es im Rahmen der Erfindung möglich, dass überstehende Anschlusselemente eines Moduls in einer wie in der Figur 2 gezeigten Öffnung 200 im Eckbereich des Grundkörpers 100 eingreifen können oder auch in den Hohlraum eines zweiten Sicherungselements 180, 180' eingreifen, so dass diese Anschlusselemente geschützt sind.

Darüber hinaus ist es denkbar, dass die Anschlusselemente eines Moduls auch in eines oder mehrere Sicherungselemente hineinragen, insbesondere in ein als Hohlraum ausgebildetes Sicherungselement und mit einem Abstand zur Innenfläche der Seitenwand, so dass diese Anschlusselemente ebenfalls vor äußerer Krafteinwirkung geschützt sind.

Die Figuren 1 und 2 zeigen keine Anordnung zweier miteinander verbundener Halterungen 400 der ersten Ausführungsform gemäß der Figuren 1 und 2.

Bei derart miteinander verbundene Halterungen berühren die zweiten Stoßflächen 113, 123 der Halterung 400 die ersten Stoßflächen 112, 122 der weiteren Halterung 400 und die Sicherungselemente 170, 170' der Halterung 400 greifen in die Sicherungselemente 180, 180' der weiteren Halterung. Dadurch sind die Halterungen gegen ein Verrutschen längs sowie quer der Schnittgeraden S gesichert.

Dank eines erhöhten Reibschlusses und/oder einer Klemmwirkung zwischen den Sicherungselementen 170, 170' und 180, 180' sind zwei verbundenen Halterungen gegen ein Verrutschen längs zur Achse A bzw. längs der Seitenwände gesichert.

Es versteht sich, dass mehr als nur zwei Halterungen auf diese Weise zu einer Reihe quasi beliebiger Länge verbindbar sind. So könnte zum Beispiel eine weitere Halterung der gleichen Ausführungsform mit der Halterung 400 an deren Stoßflächen 112 und 122 verbunden werden. Hierzu wäre die weitere Halterung zunächst entsprechend der Halterung 400 auszurichten und entsprechend entlang der Schnittgeraden zu positionieren. Anschließend ist die weitere Halterung längs der Schnittgeraden zu bewegen, bis die Sicherungselemente vollständig ineinandergreifen und die eine Halterung in die andere Halterung eingesteckt ist. Mit einer umgekehrten Bewegung lässt sich die weitere Halterung von der Halterung 400 dann wieder lösen.

Zur Bildung eines erfindungsgemäßen modularen Stapelsystems, stelle man sich vor, dass sich zwei Halterungen der Anordnung gemäß Figuren 1 und 2 auf einer horizontalen Unterlage, beispielsweise auf einer Transportpalette, direkt gegenüberstehen und zwar mit einem Abstand zwischen den Innenflächen der senkrechten Seitenwände der sich gegenüberstehen Halterungen, der der Breite von zu lagernden und/oder zu transportierenden Modulen oder anderen flachen quaderförmigen Körpern wie Flachgläsern entspricht, dann ist im Prinzip der Anfang zur Bildung eines Stapels von vertikal ausgerichteten Modulen bzw. Flachgläsern mittels des erfindungsgemäßen modularen Stapelsystems gemacht.

Im Rahmen dieser Anmeldung und insbesondere nachfolgend wird ein Stapel von Modulen oder anderen flachen, quaderförmigen Körpern, die nicht in jeweils horizontaler Ausrichtung übereinander aufgeschichtet sind, sondern in jeweils vertikaler Ausrichtung, also mit der ihre Dicke definierenden Seite parallel zu einer horizontalen Unterlage, nebeneinander geschichtet sind, auch als Querstapel bezeichnet. Insofern werden also Module wie auch Flachgläser insbesondere in einem Querstapel gelagert bzw. transportiert. Es versteht sich dabei, dass jeder der vier Eckbereiche eines Moduls in einem Stapel wie auch in einem Querstapel jeweils in einer gemeinsame Achse mit den entsprechenden Eckbereichen der anderen Module im Stapel bzw. Querstapel liegt.

Angenommen es sollen 20 Module quergestapelt werden, dann sind beginnend an den ersten Stoßflächen der zwei sich gegenüberstehenden Halterungen entsprechen der oben beschriebenen Vorgehensweise nach und nach jeweils 18 weitere Halterungen anzusetzen und miteinander zu verbinden, so dass sich schließlich zwei Reihen aus je 20 Halterungen mit gleichbleibendem Abstand auf der Transportpalette gegenüberstehen.

Nach diesem ersten Schritt des Bildens und Platzierens zweier Reihen von Halterung auf einer horizontalen Unterlage, ist in einem zweiten Schritt das erste Modul in eine vertikale Ausrichtung zu bringen, das heißt, es ist mit den seine Dicke definierenden Seiten bzw. Seitenflächen parallel zu den zwei gemeinsamen Achsen auszurichten, in denen jeweils die Schnittgeraden von 20 Halterungen einer der beiden Reihen liegen. Dabei spielt es im Wesentlichen keine Rolle, ob das Modul mit seiner längsten oder zweitlängsten Seite parallel zur horizontalen Unterlage ausgerichtet wird. Entscheidend ist, dass die Halterungen entsprechend dem Abstand zwischen den zwei unteren Eckbereichen beabstandet sind. In einem dritten Schritt kann das Modul mit seinen beiden unteren Eckbereichen in die Spalte der zwei sich gegenüberstehen Halterungen, die als letzte mit ihrer jeweiligen Reihe verbunden wurden, von oben kommend senkrecht eingesetzt werden. Und in einem vierten Schritt ist je eine weitere Halterung mit ihrem Spalt auf eine der zwei oberen Eckbereiche des Moduls aufzusetzen. Hier ist jedoch darauf zu achten, dass die ersten und zweiten Stoßflächen bzw. Sicherungselemente der zwei Halterungen an den oberen Eckbereichen des Moduls in jeweils die gleiche Richtung weisen, wie die der zwei Halterungen an den unteren Eckbereichen des Moduls.

Für die übrigen 19 Module sind die Schritte zwei, drei und vier jeweils zu wiederholen, wobei der vierte Schritt stets noch das Verbinden der weiteren Halterungen mit den Halterungen an den oberen Eckbereichen des vorherigen Moduls umfasst.

Der Querstapel mit 20 Modulen ist fertig, wenn schließlich auch entlang der oberen beiden Eckbereiche der einzelnen Module zwei Reihen von je 20 miteinander verbundenen Halterungen entstanden sind.

Zum Abbauen des Querstapels sind die zuvor beschriebenen Schritte im Wesentlichen lediglich in umgekehrter Reihenfolge auszuführen.

Es sei erwähnt, dass mit dem erfindungsgemäßen modularen Stapelsystem grundsätzlich, und insbesondere zur Lagerung, Querstapel mit beliebig vielen Modulen darin anlegbar sind. Hinsichtlich der Transportierbarkeit eines Querstapels, kann dieser durchaus 32 Module umfassen, wobei im jeweiligen Einzelfall die Abmessungen der zu transportierenden Module zu berücksichtigen sind.

Ein modulares Stapelsystem mit drei weiteren Halterungen wie der Halterung 400 an den übrigen drei nicht dargestellten Eckbereichen des Moduls, kann dieses auf einfache Weise am Installationsort, beispielsweise auf einem Dach, montiert werden, wobei praktischer Weise die gleichen Halterungen zur Montage verwendet werden können, in denen das Modul in einem Querstapel mit weiteren Modulen angeliefert wurde.

Ein Vorteil dieser Ausführungsform der Halterung 400 mit ihren auf einem relativ einfachen Steckmechanismus beruhenden ersten und zweiten Sicherungselementen besteht darin, dass sich damit Querstapel von Modulen auch automatisiert erzeugen lassen.

Zunächst wird bei einem ersten Modul an jedem seiner vier Eckbereiche eine Halterung 400 aufgesteckt, so dass sich ein Abschnitt jedes Eckbereichs in dem Spalt 300 einer von vier Halterungen 400 befindet. Anschließend wird das erste Modul in horizontaler Ausrichtung auf eine entsprechende Aufnahmevorrichtung der Anlage abgesetzt, wobei nur die ersten Stoßflächen der vier Halterungen 400 nicht jedoch das Modul selbst in Berührung mit der Aufnahmevorrichtung kommen. Dann wird bei einem zweiten Modul von weiteren vier Halterungen 400 an jedem der vier Eckbereiche eine Halterung 400 aufgesteckt, so dass sich ein Abschnitt jedes Eckbereichs des Moduls in dem Spalt 300 einer der vier weiteren Halterungen 400 befindet. Danach wird das zweite Modul in horizontaler Ausrichtung von oberhalb des bereits auf der Aufnahmevorrichtung befindlichen Moduls auf dieses herabgesenkt, bis die ersten Sicherungselemente, das heißt vorzugsweise die Zapfen, der Halterungen an dem ersten Modul vollständig von den ersten Sicherungselementen, also den offenen Hohlräumen, der Halterungen an dem zweiten Modul aufgenommen sind und sich die Stoßflächen der Halterungen beider Module berühren bzw. die weiteren Halterungen des zweiten Moduls auf den Halterungen des ersten Moduls aufliegen. Die Schnittgeraden miteinander verbundener Halterungen liegen auch hier wieder in einer gemeinsamen Achse.

Für jedes weitere Modul des zu bildenden Querstapels sind die zuvor für das zweite Modul erläuterten Schritte zu wiederholen. Ist die gewünschte Anzahl zu stapelnder Module erreicht, also zum Beispiel 25, wird der Stapel mit umlaufenden Spannbändern versehen, um insbesondere auch ein Verrutschen der Halterungen längs der gemeinsamen Achse der Schnittgeraden besonders gesichert vorzubeugen. Daraufhin wird der gesamte Stapel unter Mitwirkung der Aufnahmevorrichtung oder einer weiteren Vorrichtung, welche kippbar ist, um 90 Grad gekippt, so dass die 25 Module in dem Stapel nunmehr vertikal ausgerichtet sind und der somit entstandene Querstapel wird auf andere horizontale Unterlage, zum Beispiel eine Transportpalette, abgesetzt.

Die Halterungen sind jedoch auch mit Stapelanlagen einsetzbar, die ausgebildet sind einen Stapel derart aufzubauen, das das zweite Modul, nachdem es an seinen vier Eckbereichen mit weiteren Halterungen versehen wurde, von unten an das bereits in der Aufnahmevorrichtung befindliche erste Modul herangeführt wird, bis die ersten Sicherungselemente, das heißt vorzugsweise die Zapfen, der weiteren Halterungen an dem zweiten Modul vollständig von den zweiten Sicherungselementen, also vorzugsweise den offenen Hohlräumen, der Halterungen an dem ersten Modul aufgenommen sind und sich die Stoßflächen der Halterungen beider Module berühren bzw. die Halterungen des ersten Moduls auf den weiteren Halterungen des zweiten Moduls aufliegen. Für jedes weitere Modul sind die zuvor für das zweite Modul erläuterten Schritte zu wiederholen, bis die gewünschte Anzahl zu stapelnder Module erreicht ist, woraufhin der Stapel mit umlaufenden Spannbändern versehen und mit Hilfe der kippbaren Aufnahmevorrichtung oder einer weiteren kippbaren Vorrichtung der Anlage um 90 Grad gekippt wird, so dass die Module in dem Stapel vertikal ausgerichtet sind und der somit entstandene Querstapel schließlich auf eine auf horizontale Unterlage wie eine Transportpalette abgesetzt werden kann.

## Patentansprüche

1. Halterung (400) zum Haltern, Lagern und/oder Transportieren von Photovoltaik-Modulen, thermischen Kollektormodulen und/oder anderen flachen, quaderförmigen Körpern (500), umfassend einen Grundkörper (100), mit
- einer ersten und einer zweiten Seitenwand (110, 120), die längs einer Schnittgeraden (S) miteinander verbunden sind und Innenflächen (111; 121) aufweisen, zwischen denen ein rechter Winkel besteht und die sich jeweils längs zur Schnittgeraden (S) zwischen einem ersten und einem zweiten Rand (114, 124; 115, 125) erstrecken, wobei
die Außenseiten des ersten bzw. zweiten Rands (114, 124; 115, 125) eine erste bzw. zweite Stoßfläche (112, 122; 113, 123) bilden, und wobei
durch den ersten und zweiten Rand (114, 124; 115, 125) und die Innenflächen (111, 121) ein Spalt (300) gebildet ist, der dazu ausgebildet ist, einen Eckbereichsabschnitt des zu halternden, lagernden und/oder zu transportierenden Photovoltaik-Moduls, thermischen Kollektormoduls und/oder flachen, quaderförmigen Körpers (500) aufzunehmen, das bzw. der mit der seine Dicke definierenden Seite parallel zur Schnittgeraden (S) ausgerichtet ist;
und mit
- wenigstens einem ersten Sicherungselement (170) und wenigstens einem zu dem ersten Sicherungselement komplementär ausgebildeten zweiten Sicherungselement (180),
wobei das erste Sicherungselement (170) mit dem zweiten Sicherungselement (180) einer entsprechend ausgerichteten weiteren Halterung (400') lösbar verbindbar ist, derart,
dass die ersten Stoßflächen (112, 122) der Halterung (400) auf den zweiten Stoßflächen (113, 123) der weiteren Halterung (400') aufliegen und die Schnittgeraden (S; S') der Halterungen (400; 400') in einer gemeinsamen Achse (A) liegen,
**dadurch gekennzeichnet, dass**
das erste und das zweite Sicherungselement wenigstens teilweise an der Außenfläche der ersten oder zweiten Seitenwand (110, 120) angeordnet ist.

2. Halterung (400) nach Anspruch 1, wobei eines oder mehrere der ersten und/oder zweiten Sicherungselemente (170, 180) wenigstens teilweise an der ersten und/oder zweiten Seitenwand (110, 120) und/oder an der ersten und/oder zweiten Stoßfläche (112, 122; 113, 123) angeformt ist bzw. sind.

3. Halterung (400) nach einem der vorstehenden Ansprüche, wobei ein erstes und/oder ein zweites Sicherungselement (170, 180) wenigstens teilweise die erste und/oder zweite Seitenwand (110, 120) bildet.

4. Halterung (400) nach Anspruch 3, wobei wenigstens derjenige Teil des ersten und/oder des zweiten Sicherungselements (170, 180), der die erste und/oder eine zweite Seitenwand (110, 120) bildet, eine Innenfläche aufweist, welche zumindest teilweise in einer Ebene parallel und/oder quer zur Ebene der übrigen Innenfläche dieser Seitenwand gerichtet ist.

5. Halterung (400) nach einem der vorstehenden Ansprüche, wobei das erste und/oder das zweite Sicherungselement (170, 170', 180, 180') eine Oberfläche aufweist, die vorzugsweise zu der Innenfläche der Seitenwand, an welcher dieses Sicherungselement angeordnet ist, parallel ist und/oder wenigstens ein Abstandshalter (600, 600', 600'', 600''') an der Außenfläche der ersten und/oder der zweiten Seitenwand (110, 120) angeordnet ist und/oder eine Oberfläche des Abstandshalters und die Oberfläche des ersten und/oder des zweiten Sicherungselements (170, 170', 180, 180') in einer Ebene liegen.

6. Halterung (400) nach einem der vorstehenden Ansprüche, wobei wenigstens ein erstes Sicherungselement (170) als Zapfen oder als Feder ausgebildet ist und wenigstens ein zweites Sicherungselement (180) als offener Hohlraum oder als Nut zur passgenauen Aufnahme des Zapfens oder der Feder der entsprechend ausgerichteten weiteren Halterung (400') ausgebildet ist und/oder das Querschnittsprofil des ersten und zweiten Sicherungselement trapezförmig ist oder die Form eines Parallelogramms aufweist.

7. Halterung (400) nach einem der vorstehenden Ansprüche, wobei die erste und/oder die zweite Seitenwand (110, 120) in dem Bereich, in dem die erste mit der zweiten Seitenwand (110, 120) längs der Schnittgeraden (S) verbunden ist, teilweise mit einer Öffnung versehen ist.

8. Halterung (400) nach einem der vorstehenden Ansprüche, hergestellt in einem Spritzgussverfahren.

9. Modulares Stapelsystem zum sicheren Haltern, Lagern und/oder Transportieren von Modulen oder anderen flachen, quaderförmigen Körpern, umfassend wenigstens eine erste, wenigstens eine zweite, wenigstes eine dritte und wenigstens eine vierte Halterung nach einem der Ansprüche 1 bis 8, wobei die zweite gegenüber der ersten (400) Halterung, die dritte gegenüber der zweiten Halterung und die vierte gegenüber der dritten Halterung jeweils um 90 Grad um die Achse (A) ihrer Schnittgeraden (S) gedreht anordenbar ist, um in den Spalt (300) jeder der Halterungen einen Abschnitt eines der vier Eckbereiche eines zu lagernden und/oder zu transportierenden flachen quaderförmigen Körpers aufnehmen zu können,
und wobei die wenigstens eine erste (400), die wenigstens eine zweite, die wenigstes eine dritte und die wenigstens eine vierte Halterung mit entsprechend ausgerichteten weiteren ersten, zweiten, dritten und vierten Halterungen lösbar verbindbar sind, derart, dass die Schnittgeraden (S, S') aller ersten, zweiten, dritten und vierten Halterungen jeweils in einer gemeinsamen Achse (A) liegen und dass die jeweils verbundenen Halterungen durch das Zusammenwirken ihrer ersten und zweiten Verbindungselemente (170, 180; 170', 180') gegen ein Verrutschen quer zur gemeinsamen Achse (A) und/oder gegen ein Verrutschen längs der gemeinsamen Achse gesichert sind.

10. Modulares Stapelsystem nach vorstehendem Anspruch, wobei die wenigstens eine erste Halterung (400) mit der Außenfläche (116) ihrer ersten Seitenwand (110) und die wenigstens eine zweite Halterung mit der Außenfläche (126) ihrer zweiten Seitenwand (120) auf einer horizontalen Unterlage anordenbar sind, derart, dass der zu lagernde und/oder zu transportierende flache quaderförmige Körper mit der seine Dicke definierenden Seite parallel zu der horizontalen Unterlage ausgerichtet ist und/oder die wenigstens eine erste Halterung (400) mit der zweiten Stoßfläche (112, 122) und die wenigstens eine zweite Halterung mit der zweiten Stoßfläche (112, 122) einer horizontalen Unterlage anordenbar sind, derart, dass der zu lagernde und/oder zu transportierende flache quaderförmige Körper mit der seine Dicke definierenden Seite senkrecht zu der horizontalen Unterlage ausgerichtet ist.

## Claims

1. A holder (400) for holding, storing and/or transporting photovoltaic modules, thermal collector modules and/or other flat cuboid bodies (500), comprising a basic body (100) having
- a first and a second side wall (110, 120) which are interconnected along a line of intersection (S) and have inner surfaces (111; 121) defining a right angle therebetween, each extending along the line of intersection (S) between a first and a second rim (114, 124, 115, 125); wherein
the outer surfaces of the first and second rims (114, 124, 115, 125) define a first and a second abutment surface (112, 122; 113, 123), respectively; and wherein
a gap (300) is defined by the first and second rims (114, 124; 115, 125) and the inner surfaces (111, 121), which gap is adapted to accommodate a portion of a corner region of the photovoltaic module, thermal collector module and/or other flat cuboid body (500) to be held, stored, and/or transported, which is aligned parallel to the line of intersection (S) with the thickness-defining edge thereof; and having
- at least one first protective element (170) and at least one second protective element (180) of a shape complementary to that of the first protective element;
wherein the first protective element (170) is detachably connectable to the second protective element (180) of a correspondingly aligned further holder (400') such that the first abutment surfaces (112, 122) of the holder (400) rest on the second abutment surfaces (113, 123) of the further holder (400') and the lines of intersection (S; S') of the holders (400, 400') lie on one common axis (A);
**characterized in that**
the first and second protective elements are arranged on the outer surface of the first or second side wall (110, 120), at least sections thereof.

2. The holder (400) according to claim 1, wherein one or more of the first and/or second protective elements (170, 180) is/are formed on the first and/or second side wall (110, 120) and/or on the first and/or second abutment surface (112, 122, 113, 123), at least sections thereof.

3. The holder (400) according to any one of the preceding claims, wherein a first and/or a second protective element (170, 180) defines at least partially the first and/or second side wall (110, 120).

4. The holder (400) according to claim 3, wherein at least that part of the first and/or the second protective element (170, 180) defining the first and/or a second side wall (110, 120) has an inner surface which is at least partially aligned in a plane parallel and/or transversely to the plane of the remaining inner surface of this side wall.

5. The holder (400) according to any one of the preceding claims, wherein the first and/or the second protective element (170, 170', 180, 180') has a surface which is preferably parallel to the inner surface of the side wall on which this protective element is arranged; and/or wherein at least one spacer (600, 600', 600", 600''') is arranged on the outer surface of the first and/or second side wall (110, 120) and/or a surface of the spacer and the surface of the first and/or second protective element (170, 170', 180, 180') lie in a same plane.

6. The holder (400) according to any one of the preceding claims, wherein at least a first protective element (170) is in the form of a stud or a tongue and at least one second protective element (180) is in the form of an open cavity or a groove, for receiving the stud or the tongue of the respective aligned further holder (400') in complementary manner, and/or wherein the cross-sectional profile of the first and second protective elements is trapezoidal or has the shape of a parallelogram.

7. The holder (400) according to any one of the preceding claims,
wherein the first and/or the second side wall (110, 120) is partially provided with an opening in the region in which the first and second side walls (110, 120) are adjoining along the line of intersection (S).

8. The holder (400) according to any one of the preceding claims, produced in an injection moulding process.

9. A modular stacking system for reliably holding, storing, and/or transporting modules or other flat cuboid bodies, comprising at least one first, at least one second, at least one third, and at least one fourth holder according to any one of claims 1 to 8, wherein the second relative to the first (400) holder, the third relative to the second holder, and the fourth relative to the third holder can be arranged in an orientation rotated by 90 degrees about the axis (A) of their respective line of intersection (S) in each case, in order to allow to accommodate in the gap (300) of each of the holders a respective portion of one of the four corner regions of a flat cuboid body to be stored and/or transported;
and wherein the at least one first (400), the at least one second, the least one third, and the at least one fourth holder are detachably connectable with correspondingly aligned further first, second, third, and fourth holders such that the lines of intersection (S, S') of all first, all second, all third, and all fourth holders lie on a respective common axis (A) and such that the respective connected holders are protected against slipping transversely to the common axis (A) and/or against slipping along the common axis due to the interaction of their first and second connecting elements (170, 180; 170', 180').

10. The modular stacking system according to the preceding claim, wherein the outer surface (116) of the first side wall (110) of the at least one first holder (400) and the outer surface (126) of the second side wall (120) of the at least one second holder can be arranged on a horizontal support surface such that the flat cuboid body to be stored and/or transported is aligned with its thickness-defining edge parallel to the horizontal support surface; and/or wherein the second abutment surface (112, 122) of the at least one first holder (400) and the second abutment surface (112, 122) of the at least one second holder can be arranged on a horizontal support surface such that the flat cuboid body to be stored and/or transported is aligned with its thickness-defining edge perpendicular to the horizontal support surface.

## Revendications

1. Elément de retenue (400) pour le maintien, le stockage et/ou le transport de modules photovoltaïques, de modules de capteurs thermiques et/ou d'autres corps plats parallélépipédiques (500), comportant un corps de base (100), avec
- une première et une deuxième paroi latérale (110, 120), qui sont reliées l'une à l'autre le long d'une droite sécante (S) et présentent des surfaces intérieures (111 ; 121) entre lesquelles est formé un angle droit et qui s'étendent respectivement longitudinalement par rapport à la droite sécante (S) entre un premier et un deuxième bord (114, 124 ; 115, 125), où
les faces extérieures du premier ou deuxième bord (114, 124 ; 115, 125) forment une première ou deuxième surface d'impact (112, 122 ; 113, 123), et où
une fente (300) est formée par le premier et le deuxième bord (114, 124 ; 115, 125) et les surfaces intérieures (111, 121), laquelle fente est conçue pour recevoir une partie de zone de coin du module photovoltaïque, du module de capteur thermique et/ou du corps plat parallélépipédique (500) à maintenir, à stocker et/ou à transporter, lesquels sont orientés par leur face définissant leur épaisseur parallèlement à la droite sécante (S) ;
et avec
- au moins un premier élément de blocage (170) et au moins un deuxième élément de blocage (180) complémentaire du premier élément de blocage,
dans lequel le premier élément de blocage (170) peut être relié de manière libérable au deuxième élément de blocage (180) d'un autre élément de retenue (400') orienté de manière correspondante, de telle manière
que les premières surfaces d'impact (112, 122) de l'élément de retenue (400) reposent sur les deuxièmes surfaces d'impact (113, 123) de l'autre élément de retenue (400') et que les droites sécantes (S ; S') des éléments de retenue (400 ; 400') se situent dans un axe (A) commun,
**caractérisé en ce que**
le premier et le deuxième élément de blocage sont agencés au moins en partie sur la surface extérieure de la première ou deuxième paroi latérale (110, 120).

2. Elément de retenue (400) selon la revendication 1, dans lequel un ou plusieurs des premier et/ou deuxième éléments de blocage (170, 180) est ou sont formés au moins en partie sur la première et/ou deuxième paroi latérale (110, 120) et/ou sur la première et/ou deuxième surface d'impact (112, 122 ; 113, 123).

3. Elément de retenue (400) selon l'une quelconque des revendications précédentes, dans lequel un premier et/ou un deuxième élément de blocage (170, 180) forment au moins en partie la première et/ou deuxième paroi latérale (110, 120).

4. Elément de retenue (400) selon la revendication 3, dans lequel au moins la partie du premier et/ou du deuxième élément de blocage (170, 180) qui forme la première et/ou une deuxième paroi latérale (110, 120) présente une surface intérieure, laquelle est orientée au moins en partie dans un plan parallèle et/ou transversal au reste de la surface intérieure de cette paroi latérale.

5. Elément de retenue (400) selon l'une quelconque des revendications précédentes, dans lequel le premier et/ou le deuxième élément de blocage (170, 170', 180, 180') présentent une surface qui est de préférence parallèle à la surface intérieure de la paroi latérale sur laquelle cet élément de blocage est agencé et/ou au moins un espaceur (600, 600', 600", 600'") est agencé sur la surface extérieure de la première et/ou de la deuxième paroi latérale (110, 120) et/ou une surface de l'espaceur et la surface du premier et/ou du deuxième élément de blocage (170, 170', 180, 180') se situent dans un plan.

6. Elément de retenue (400) selon l'une quelconque des revendications précédentes, dans lequel au moins un premier élément de blocage (170) est réalisé sous la forme d'un tourillon ou sous la forme d'un ressort et au moins un deuxième élément de blocage (180) est réalisé sous la forme d'une cavité ouverte ou sous la forme d'une rainure pour le logement en ajustement précis du tourillon ou du ressort de l'autre élément de retenue (400') orienté de manière correspondante et/ou le profil transversal du premier et deuxième élément de blocage est trapézoïdal ou présente la forme d'un parallélogramme.

7. Elément de retenue (400) selon l'une quelconque des revendications précédentes, dans lequel la première et/ou la deuxième paroi latérale (110, 120) est pourvue en partie d'une ouverture dans la zone dans laquelle la première paroi latérale (110, 120) est reliée à la deuxième paroi latérale (110, 120) le long de la droite sécante (S).

8. Elément de retenue (400) selon l'une quelconque des revendications précédentes, fabriqué au cours d'un procédé de moulage par injection.

9. Système d'empilement modulaire pour le maintien, le stockage et/ou le transport sécurisés de modules ou d'autres corps plats parallélépipédiques, comportant au moins un premier, au moins un deuxième, au moins un troisième et au moins un quatrième élément de retenue selon l'une quelconque des revendications 1 à 8, dans lequel le deuxième élément de retenue par rapport au premier élément de retenue (400), le troisième élément de retenue par rapport au deuxième élément de retenue et le quatrième élément de retenue par rapport au troisième élément de retenue peuvent être agencés respectivement en rotation de 90 degrés autour de l'axe (A) de leurs droites sécantes (S), afin de pouvoir loger dans la fente (300) de chacun des éléments de retenue une partie d'une des quatre zones de coin d'un corps parallélépipédique plat à stocker et/ou à transporter, et dans lequel l'au moins un premier élément de retenue (400), l'au moins un deuxième élément de retenue, l'au moins un troisième élément de retenue et l'au moins un quatrième élément de retenue peuvent être reliés de manière libérable à d'autres premier, deuxième, troisième et quatrième éléments de retenue orientés de manière correspondante, de telle manière que les droites sécantes (S, S') de l'ensemble des premier, deuxième, troisième et quatrième éléments de retenue se situent respectivement dans un axe (A) commun, et en ce que les éléments de retenue respectivement reliés, du fait de la coopération de leurs premiers et deuxièmes éléments de liaison (170, 180 ; 170', 180'), sont empêchés de glisser transversalement à l'axe (A) commun et/ou de glisser le long d'un axe commun.

10. Système d'empilement modulaire selon la revendication précédente, dans lequel l'au moins un premier élément de retenue (400), par la surface extérieure (116) de sa première paroi latérale (110), et l'au moins un deuxième élément de retenue, par la surface extérieure (126) de sa deuxième paroi latérale (120), peuvent être agencés sur un support horizontal, de telle sorte que le corps parallélépipédique plat à stocker et/ou à transporter est orienté par sa face définissant son épaisseur parallèlement au support horizontal et/ou l'au moins un premier élément de retenue (400), par la deuxième surface d'impact (112, 122), et l'au moins un deuxième élément de retenue, par la deuxième surface d'impact (112, 122), peuvent être agencés sur un support horizontal de telle manière que le corps parallélépipédique plat à stocker et/ou à transporter est orienté par sa face définissant son épaisseur perpendiculairement au support horizontal.
